(19) **Europäisches Patentamt**
**European Patent Office**
**Office européen des brevets**

(11) **EP 3 819 160 B1**

(12) **EUROPEAN PATENT SPECIFICATION**

(45) Date of publication and mention
of the grant of the patent:
**10.07.2024   Bulletin 2024/28**

(51) International Patent Classification (IPC):
**B60L 53/10** *(2019.01)*     **B60L 53/14** *(2019.01)*
**H02M 3/335** *(2006.01)*     **B60L 53/12** *(2019.01)*

(21) Application number: **20197597.6**

(22) Date of filing: **22.09.2020**

(52) Cooperative Patent Classification (CPC):
**B60L 53/14; B60L 53/10; B60L 53/12;**
**H02M 3/33561; H02M 3/33584; Y02T 10/70;**
**Y02T 10/7072; Y02T 90/14**

(54) **WIDE VOLTAGE RANGE POWER CONVERSION SYSTEM FOR ELECTRIC AND/OR HYBRID VEHICLES**

LEISTUNGSUMWANDLUNGSSYSTEM MIT GROSSEM SPANNUNGSBEREICH FÜR ELEKTRO-
UND/ODER HYBRIDFAHRZEUGE

SYSTÈME DE CONVERSION D'ÉNERGIE À LARGE GAMME DE TENSION POUR VÉHICULES
ÉLECTRIQUES ET/OU HYBRIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.11.2019   EP 19382983**

(43) Date of publication of application:
**12.05.2021   Bulletin 2021/19**

(73) Proprietor: **Fico Triad, S.A.**
**08028 Barcelona (ES)**

(72) Inventor: **Ruíz Erni, Iván**
**08028 Barcelona (ES)**

(74) Representative: **Hoffmann Eitle**
**Hoffmann Eitle S.L.U.**
**Paseo de la Castellana 140, 3a planta**
**Edificio LIMA**
**28046 Madrid (ES)**

(56) References cited:
**EP-B1- 2 450 222**     **CN-A- 110 112 959**
**JP-A- 2000 358 305**     **JP-A- 2013 230 020**
**US-A1- 2004 179 381**     **US-A1- 2010 213 902**
**US-A1- 2018 029 479**     **US-A1- 2019 143 822**
**US-B2- 10 160 332**

**Description**

**Field and object of the invention**

The present invention refers to an electronic power conversion system to convert and/or transfer electric power between ports like power sources and/ or loads operating at different or the same voltage. The system is preferably adapted for its integration in an electric and/or hybrid vehicle.

An object of the invention is to provide a power conversion system based on a transformer, that can operate at the optimum conversion point or close to it for wide voltage variations, so as to increase efficiency of the power conversion, and reduce reactive power and EMI noise.

Another object of the invention, is to provide a power conversion system capable of multi-directional power conversion and energy transfer between multiple ports of electric-powered vehicle.

The power conversion system of the invention can be manufactured with a reduced number of components, thereby reducing manufacturing cost and size and increasing efficiency and system performance.

**Background of the invention**

Vehicle electric systems integrate a variety of equipment or sub-subsystems operating at the same or different dc nominal voltage. For example, electric and hybrid vehicles incorporate a traction battery that operates at high voltage (typically ranging from 250 Volts to 450Volts or from 350 Volts to 800 Volts) to energize the traction system through an inverter, a heat system, and an auxiliary battery to supply low voltage power to equipment onboard the vehicle that requires lower voltage. The most widespread nominal low voltages are 12V and 48V, which correspond to the equipment traditionally used in the automobile environment.

Therefore, several voltage levels and their required charging systems are typically integrated in electric vehicles and/ hybrid electric vehicles, namely High-voltage battery, Low-voltage battery, traction inverter bus, etc. Power is transferred between these different voltage ports by means of power modules, generally dc/dc converters and typically one ac/dc converter as the PFC.

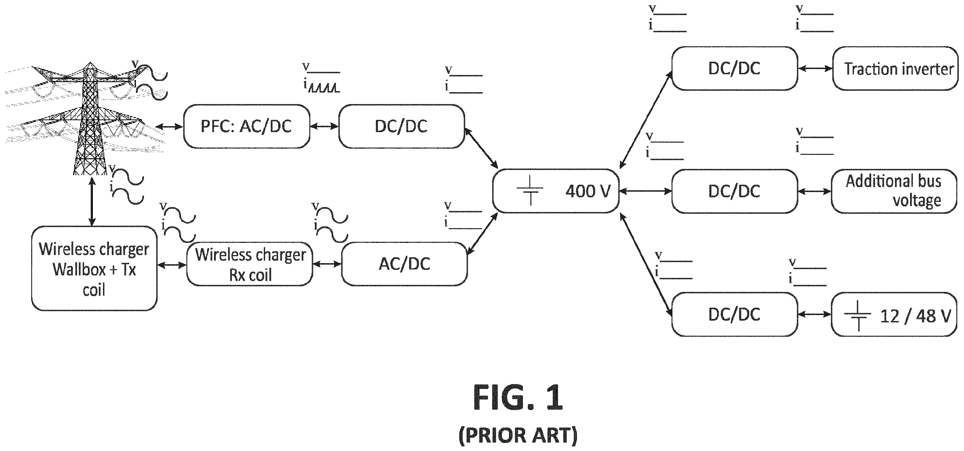

**Figure 1** illustrates a conventional electrical vehicle system including the subsystem to recharge the electric or hybrid vehicle from the grid, and other several vehicle electric sub-systems. The external charging of the traction battery can be carried out using alternative charging systems, such as directly from the grid through an ac/dc converter including a Power Factor Correction (PFC), directly from grid through a dc/dc converter, through a wireless charger, etc. In turn, electric and hybrid vehicles are capable of charging the auxiliary battery from the traction battery, or even from an external power source during external charging, thus, specific power converters are provided for such power conversion between internal subsystems.

The low voltage auxiliary battery can also be used to transfer power to the high voltage traction battery, and for that power transfer another dc/dc power converter has to be provided. Furthermore, the traction battery can also be used to supply power to the onboard electronic equipment of the vehicle, so that another or the same dc/dc bidirectional converter is incorporated to lower the voltage of the traction battery to the nominal voltage of the onboard equipment.

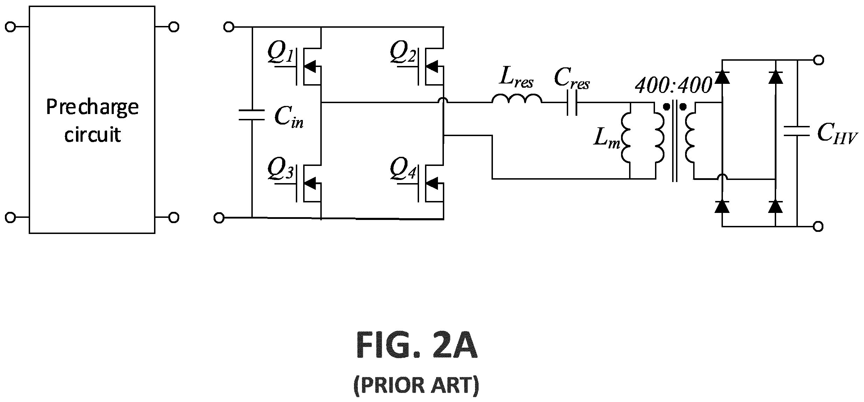

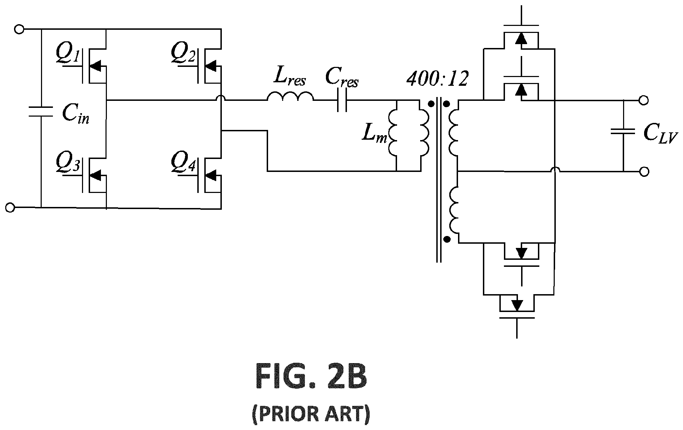

In consequence, a multiplicity of power converters of different topology are integrated in the vehicle. LLC resonant topologies are conventionally used to implement the converters due to its wide voltage gain, however these converters only allow unidirectional power flow. **Figures 2A,2B** show prior art LLC converters conventionally used to individually transfer power between different power sources / loads in a vehicle.

The conventional approach, is to provide specific converters with different topology configurations for each voltage conversion rate requirement, so that, a multiplicity of different power converters have to be provided to convert and transfer power between the different power sources and loads, and as consequence, two or more converters are connected to the same power source or load.

This conventional approach results in complex circuits with a lot of components (power semiconductors, transformers, microcontrollers, sensors, connectors wires, enclosures etc), so that many redundancies appear, thereby increasing manufacturing cost and complexity.

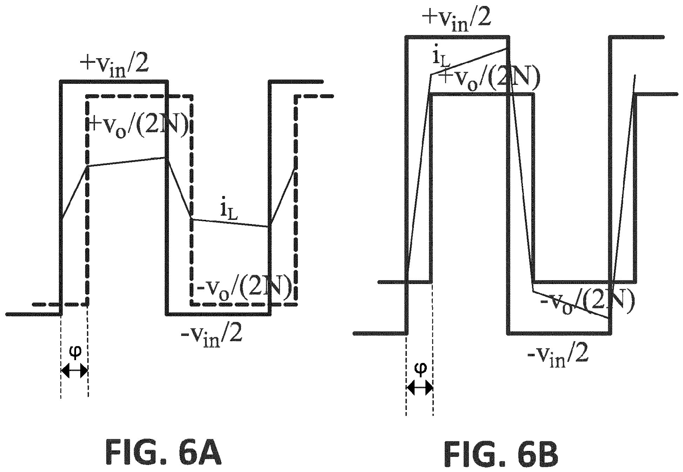

In a most of isolated power converters, like LLC or Dual Active Bridge topologies, optimum operating point is achieved when $v_o/n$ is equal to $v_{in}$, as represented in **Figure 6A** and as expressed in the following equation:

$$\frac{v_o}{N} = v_{in} \rightarrow \eta \uparrow\uparrow$$

wherein $V_o$ and $V_{in}$ are output and input voltages respectively, N is the transformer windings turns ratio, and "$\eta$" is power transfer efficiency.

However, in on board battery chargers, $v_o$ corresponds to battery high voltage that is in the wide range of 250 V - 450 V, so efficiency "$\eta$" decreases, as represented in **Figure 6B** and as expressed in the following equations:

$$\frac{v_o}{N} \gg v_{in} \rightarrow \eta \downarrow\downarrow$$

$$\frac{v_o}{N} \ll v_{in} \to \eta \downarrow\downarrow$$

Therefore, there is a need for power conversion systems for on board battery chargers, with increased power transfer efficiency for wide operating range.

The U.S. patent publication US 2019/143822 A1 relates to a vehicle including a power distribution module, which includes a hybrid transformer coupled to a charger stage, a traction battery, and an auxiliary battery. The hybrid transformer includes first and second primary windings coupled in series and connected to the charger stage.

The U.S. patent US 10160332 B2, relates to a topology for electric power distribution in a vehicle that includes a high-voltage bus connected to a DC-DC electric power converter that is connected to a low-voltage DC load. The DC-DC electric power converter includes a high-voltage switching circuit, a transformer, and a low-voltage rectifier. The high-voltage switching circuit includes first and second switches arranged in series between positive and negative legs of the high-voltage electric power bus at a first node that connects to a leg of an inductor of the transformer.

The U.S. patent publication US 2010/213902 A1 descries a system for charging a high voltage battery that includes a low DC voltage battery, a DC-to-AC converting circuit, a controller, a AC-to-DC converting circuit and a high DC voltage battery. The low voltage battery outputs a low DC voltage signal. The DC-to-AC converting circuit receives the low DC voltage signal to convert into a chopped DC voltage signal.

## Summary of the invention

The invention is defined in the attached independent claim, and satisfactorily solves the above-mentioned demands of the prior art, by providing a power conversion system for electric and/or hybrid vehicles, that comprises a transformer having at least two windings and at least two power modules connected respectively to one to the windings of the transformer such the power modules are galvanically isolated from each other.

According to the invention, the transformer is a variable turns (coils) ratio ($N_m$) transformer, having at least one variable turns winding. Additionally, the system includes a control unit adapted to dynamically set a transformer turns ratio ($N_m$) based on input and output voltages ($V_{in}$, $V_o$) measured respectively at the two power modules of the system coupled to transformer windings, to bring the expression $V_o / (V_{in} * N_m)$ close to 1. In particular, the voltages ($V_{in}$, $V_o$) are measured at the respective input / output terminals of the power modules between which power is being transferred.

Additionally, at least one power module includes means for blocking circulation of "dc" current. Preferably, this blocking means comprises a capacitor, and more preferably one or more capacitors connected in parallel with the power module in a way as to block or impede dc current circulation.

Conventionally, the transformer with variable turns ratio ($N_m$), has at least one winding with two or more winding taps, that is, the winding has several connection taps connected to different points of the winding, so that, by selecting one of the taps for the winding connection, more or less turns or coils of the winding are connected for current circulation

Therefore, the input and out voltages $V_o$ and $V_{in}$ at a pair of coupled power modules are measured continuously, and the control unit is adapted to set dynamically the transformer transformation ratio $N_m$ for that pair of coupled converters depending on the measured input and output voltages $V_o$ and $V_{in}$, by selecting the winding tap which makes the expression $v_o/(v_{in}*N_m)$ closest to 1.

In this way, the converter operation point is optimized for wide voltages variations, thus, high efficiency is achieved and less reactive power flows along the circuit. In addition, higher power density is achieved and EMI noise is reduced.

The system further comprises a winding taps selector operable by the control unit, to selectively connect one of the winding taps with the input of the power module connected to that winding, thereby to set the transformer turns ratio ($N_m$) to a value that brings the expression $V_o / (V_{in} * N_m)$ closest to 1. For example, the control unit can calculate dynamically the expression $V_o / (V_{in} * N_m)$ for all the available winding taps, and select the one that makes that expression closest to 1.

The winding tab selector might be implemented as one multi-pole switching device, preferably a multi-pole relay.

Furthermore, in the case that a full bridge module is physically placed, it can be operated to perform as a half bridge. For this, the control unit is also adapted to permanently switch off one switching device of one branch and permanently switch on the other switching device of the same branch during a time period, in a way that the full bridge power module operates as a half bridge power module. In this way, semi-bridge or full-bridge modules can be used indistinctly, allowing a factor of 2 to be entered in the transformation ratio.

This feature of the invention can be combined with the variable transformer to save winding outputs. That is, a ratio of turns N, can be converted to 2N if operated in full bridge mode or to N if operated in half bridge mode as explained above.

In a preferred embodiment, the power conversion system additionally comprises several ports of different or the same voltage, and it is capable of transferring and converting power indistinctly between ports and in any direction with a reduced number of modules among the ports.

The control unit is adapted for controlling the operation, that is, the power conversion process, of each one of the power modules, for example by means of a PWM control. The control unit is additionally adapted for operating the power modules, as to transfer power between two or more of the power modules. The control unit is additionally adapted for selecting the direction of power flow during the power transfer between the power modules. The control unit accomplishes that function by setting a phase shift between a pair of power modules between which power is being transferred.

With the above-defined architecture, only one transformer and only one control unit are used in common for all the power modules. In contrast to the prior art, only one power converter is connected to each power source or load, therefore the number of components and the complexity of the system, are reduced significantly.

The system includes an inductor connected in series between the pair of power modules between which power is being transferred. This can be implemented by incorporating the inductor in at least one of the power modules. In the case that only one power module has an inductor incorporated, for transferring power between the power modules with no inductor, the control unit is adapted for transferring power between those two power modules through the power module with the inductor. Also the inductor can be integrated in the transformer as leakage inductance for high frequencies or when a little L is needed.

In other preferred embodiment, each one of the power modules has an inductor incorporated.

The control unit is further adapted for controlling or varying the duty cycle and/ or the phase shift, and/or the frequency of any pair of power modules between which power is transferred. The control unit operates the pair of power modules at the same switching frequency.

The power modules consist of: half bridges or full bridges.

In other preferred embodiments, the control unit is adapted to operate a full bridge module as a half bridge.

A half bridge may have two input/output terminals and a first branch including two switching devices connected in series between the two terminals, and a second branch including two capacitors connected in series between the two terminals, thus, these two branches are connected in parallel. The half bridge power converted is connected to the two terminals of a winding of the transformer respectively at the central connection line between the two semiconductor switching devices and at the central connection between the two capacitors.

Another half bridge may be composed by the two switches and one capacitor connected through a first end to the central connection line between the two switches. The transformer winding is also connected to the second end of the capacitor and one end of the first branch. Other half bridge topologies are not ruled out.

The full bridge module has two input/output terminals, and a first and second branches including each branch, two semiconductor switching devices connected in series between the two terminals, and a third branch including a capacitor connected between the two terminals, thus, the three branches are connected in parallel. The full bridge power converted is connected to the two terminals of a winding of the transformer, respectively at the central connection line between the two semiconductor switching devices.

In a preferred embodiment, one power module is adapted for its connection (through its input/output terminals) with a traction battery of an electric and/or hybrid vehicle, and another power module is adapted for its connection (through its input/output terminals) with a low-voltage battery of an electric and/or hybrid vehicle. Additionally, one power module is adapted for its connection (through its input/output terminals) with an external charging system for charging an electric and/or hybrid vehicle.

## Brief description of the drawings

Preferred embodiments of the invention are henceforth described with reference to the accompanying drawings, wherein:

Figure 1.- shows a conventional electrical vehicle system including the subsystem to charge the electric or hybrid vehicle from the grid, and other several vehicle electric sub-systems.

Figure 2.- shows in figures A, B conventional LLC topologies according to the prior art.

Figure 3.- shows an electric diagram of a preferred embodiment of the invention including a variable turns ratio transformer and two power modules.

Figure 4.- shows an electric diagram of another preferred embodiment of the invention, also including a variable turns ratio transformer and multiple power modules.

Figure 5.- shows in figures A, B, and C three graphs representing the voltage conversion between two power modules, and the phase shift control performed during the process.

Figure 6.- shows two graphs similar to those in Figure 5, comparing the power transfer efficiency between a converter operating close to the optimum operating point Figure 6A, and a poor efficiency converter operating with large difference between input and output voltages, Figure 6B.

Figures 7 and 8.- shows two electric diagrams of an example of a power module system according to the invention. In Figure 7, the arrows represent the different paths for transferring and/or converting power, considering that at least two power modules or even all of them, can be operative at the same time.

## Preferred embodiment of the invention

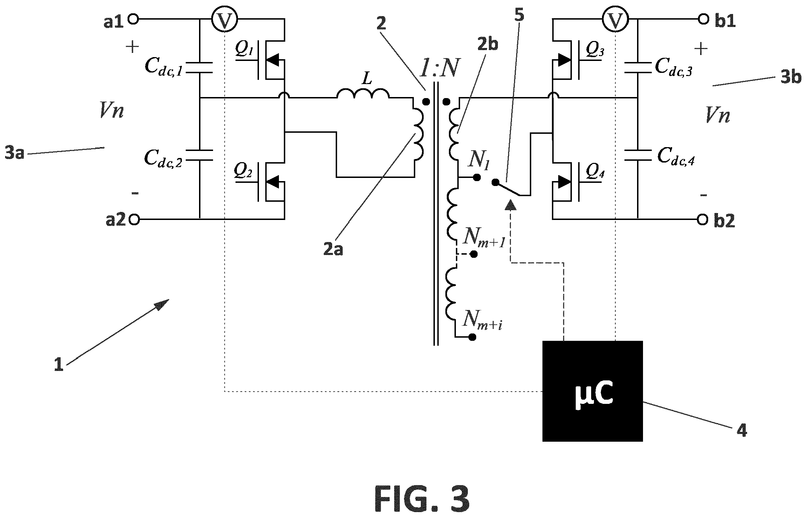

**Figure** 3 shows a power conversion system (1) according to the invention, that comprises first and second power modules (3a,3b), in this particular example half bridges power modules, coupled respectively to two windings (2a,2b) of a transformer (2) for transferring power from one module to the other. Each power module (3a,3b) has a first branch with two switching devices connected in series between terminals (a1,a2) and (b1,b2) respectively. The power switching devices consist in this example, of power transistors (Q1,Q2) and (Q3,Q4) respectively.

Each power module (3a,3b) further includes means for blocking circulation of "dc" current through the module. Preferably, the blocking means comprises at least one capacitor. In this particular example, this means are embodied as a second branch connected in parallel with the first branch between the terminals (a1,a2) and (b1,b2), and this second branch has two capacitors (Cdc1, Cdc2, Cdc3, Cdc4) respectively connected in series. Each power module (3a,3b) is connected with the two terminals of a transformer winding (2a,2b), at the connection line between the transistors (Q1,Q2) and (Q3,Q4), and the connection line between the capacitors (Cdc1, Cdc2, Cdc3, Cdc4).

As shown in **Figure 3,** the first power module (3a) is connected to the transformer winding (2a) through an inductor (L), and the second power module (3b) is connected to the transformer winding (2b) through a winding tab selector.

The transformer (2) of this embodiment, is a variable turns transformer having at least one winding (2b) provided with a plurality of winding taps ($N_1$, $N_{m+1}$, $N_i$), by means of which several points of the winding (2b) are externally connectable for selectively connecting more or less number of turns of the winding in a known manner.

For that, the system (1) comprises the winding taps selector implemented as a multi-pole switching device, for example a multi-pole relay or switch (5) operable by the control unit (4).

Additionally, the system includes voltage measuring means for measuring input/output voltage at the power modules, more specifically for measuring voltage ($V_{in}$) at the terminals (a1,a2) of the first power module (3a), and voltage ($V_o$) at the terminals (b1,b2) of the second power module (3b).

The control unit (4) is adapted to select, based on the measured voltages ($V_{in}$, $V_o$) at the power modules (3a,3b), the winding tap ($N_1$, $N_{m+1}$, $N_i$), that is, the transformer turns ratio ($N_m$), that brings the expression $V_o$ / ($V_{in}$ * $N_m$) closest to 1.

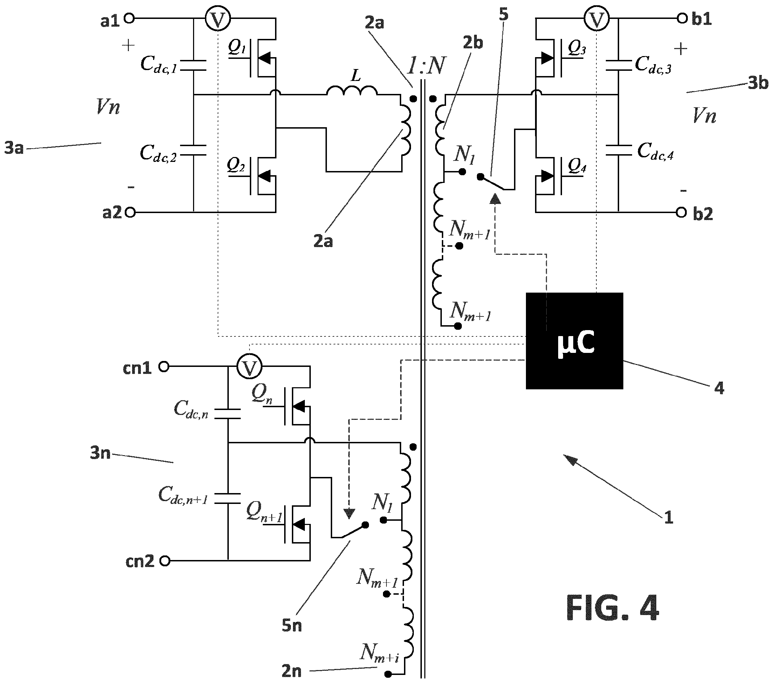

In the alternative embodiment of **Figure 4,** the transformer (2) has two or more tapered windings (3b,3n) either at the primary side, at the secondary side or at both sides. The additional tapered windings (3n) can perform in the same manner as the one described above with respect to **Figure 3,** operated by the control unit (4) by means of one or more tap selectors (5n).

In the case of **Figure 4,** if power is transferred between power modules (3b) and (3n), the control unit (4) selects the combination of (Nm) and (Nn) turns ratio, to select the one that makes the ratio: $v_n$*$N_m$/($v_o$*$N_m$) closest to 1.

**Figures 3** and **4** shows preferred embodiments incorporating only half bridges, but other preferred embodiments of the invention include any combination of full bridges and half bridge modules with the same functionalities and operation described above for **Figures 3** and **4**.

For the transitions of the winding taps selectors, that is, for activating/deactivating the relays, the control unit (4) is adapted to first stop the power conversion process by making the phase zero between the modules, at that point stop switching the transistors (Q1 - Qn), and then it waits a short time to ensure that there are no recirculating currents through the system. When there are no currents through the transistors, the control unit (4) operates the relays as explained above, setting the desired turns ratio.

The control unit (4) then waits again for a short time to ensure the correct switching of the relays. Finally, the control unit (4) restarts the power transfer process with the newly selected transformer turns ratio.

Furthermore, if it is necessary to improve the response of the system to transients, disturbances, accuracies, etc; the control unit adaptation can be modified during this time to address these issues.

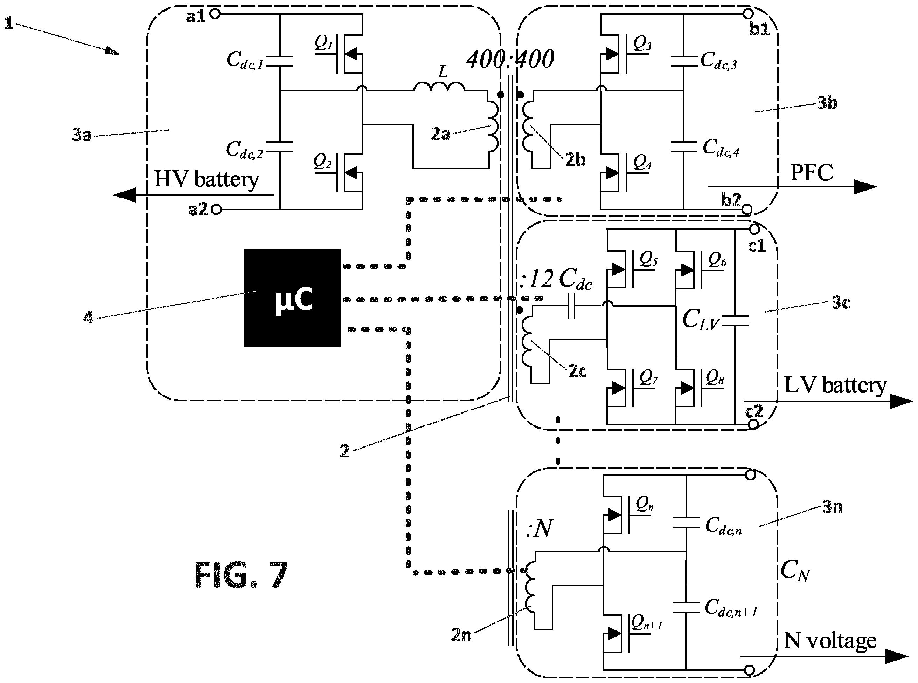

Additionally, the control unit (4) is further adapted to permanently switch off one switching device of one branch and permanently switch on the other switching device of the same branch during a time period, in a way that a full bridge power module can operate as half bridge power module. For example, in the full bridge (3c) of **Figure 7,** the control unit (4) could permanently switch on transistor (Q7) and permanently switch off (Q5) during a time period, such that, the full bridge would operate as a half bridge.

This functionality is preferably implemented in combination with the variable transformation ratio described above in connection with **Figures 3** and **4**, such that, the turns ratio ($N_m$) can be converted to ($2N_m$) if the power module is operated as a full bridge, or to ($N_m$) if operated as half bridge mode as explained above.

**Figure 7** is an example of a multi-port and multidirectional power conversion system **(1)** according to the invention. The system (1) comprises a transformer (2) having at least three windings (2a,2b,2c), in the figure appear "n" windings (2a,2b,2c,... ,2n), at least three power modules (3a,3b,3c), in the figure appear n power modules (3a,3b,3c,... ,3n) connected respectively to one winding (2a,2b,2c,...,2n) of the transformer (2). More specifically, a first power module (3a) is connected to the first winding (2a) of the transformer (2), operating at 400V and it is adapted for its connection with a High-voltage traction battery, a second power module (3b) is connected with a second winding (2b) of the transformer (2), operating at 400V too, and it is adapted for its connection to an external charging system. A third power module (3c) is connected to a third winding (2c) of the transformer (2), operating at 12V, and it is adapted for its connection with a Low-voltage battery of the vehicle. Each power module is a port of the system (1). Additional n module (3n) can be connected to the n winding (2n) of the transformer (2) adapted for its connection to any electrical vehicle system.

First and second power modules (3a,3b) are half bridge having two input/output terminals (a1,a2,b1,b2), and a first branch including two semiconductor switching devices, in this case two power transistors (Mosfets) (Q1,Q2,Q3,Q4) connected in series between the two terminals (a1,a2,b1,b2), and a second branch including two capacitors (Cdc1,Cdc2,Cdc3,Cdc4) connected in series respectively between the two terminals (a1,a2,b1,b2). Both half bridge power modules (3a,3b) are respectively connected to the two terminals of a first and second windings (2a,2b) of the transformer (2), respectively at the central connection line between the two semiconductor switching devices (Q1,Q2,Q3,Q4), and the central connection line between the two capacitors (Cdc1,Cdc2,Cdc3,Cdc4).

An inductor (L) is connected in series between the first winding (2a) of the transformer (2) and the central connection line between power transistors (Q1,Q2) of the first power module (3a). The leakage inductance of the transformer (2) may be considered as the inductor (L) with high frequencies or when a little L is needed.

The third power module (3c) is a full bridge having two input/output terminals (C1,C2) and a first and second branches including each branch, two power transistors connected in series, (Q5,Q7) in the first branch, and (Q6,Q8) in the second branch, and connected each branch in parallel between the two terminals (C1,C2). The third power module (3c) has a third branch including a capacitor (Clv) connected between the two terminals (C1,C2). The full bridge power module is connected to the two terminals of a third winding (2c) of the transformer (2), respectively at the central connection lines of the two branches between the pairs of power transistors (Q5,Q7) and (Q6,Q8).

A capacitor (Cdc) is connected in series between the winding of the transformer (2c) and the central connection line between power transistors (Q6,Q8) of the same branch.

In other practical implementations of the invention, three or more power modules (either half-bridge or full-bridge type) can be connected each of them to three or more windings of the transformer (2) and operating at an N voltage, as represented by the power module (3n) of **Figure 7**.

A control unit (4) like a programmable electronic controller is provided, for example integrated with the power module (3a), and it is adapted for controlling the conversion operation of each one of the power modules (3a,3b,3c,... ,3n), by switching on and off the power transistors in a manner known for a skilled person in the art. Power transistors driving can be performed via isolated drivers like opto-drivers.

Preferably, isolated voltage and current measurements of each module are provided to the control unit (4).

Optionally, a relay is connected at the input of each power module to enable or disable a particular power module. Also, the relay may be placed between the winding and the power module to fully disconnect this module.

The control unit (4) is additionally adapted for dynamically selecting at least a pair of power modules for transferring power between that pair of power modules. All of the power modules (3a,3b,3c,3n) can operate at the same time, depending on the requirements of a specific situation of the vehicle.

Furthermore, the control unit (4) is adapted for setting the duty cycle and for setting the switching frequency of any pair of power modules during the power transfer. The selected pair of power modules are operated at the same switching frequency.

In the implementation of **Figure 7** only the first power module (3a) is provided with an inductor (L), so for transferring power for example between the second and third power modules (3b,3c), the control unit (4) is adapted for transferring power between those power modules through the first power module (3a) so power is always transferred through at least one inductor (L). In that case, power is first transferred from the second power module (3b) to the High-voltage battery through the first power module (3a), and then from the High-voltage battery power is finally transferred to the Low-voltage battery through the third power module (3c).

In other implementations, two or more of the power modules are provided with a series inductor (L) connected in the same manner described above for the first power module (3a). For this, an inductor can incorporated in one or more power modules, or the internal leakage inductor of the transformer could be used if the value of that leakage inductor is suitable for a specific operating frequency range.

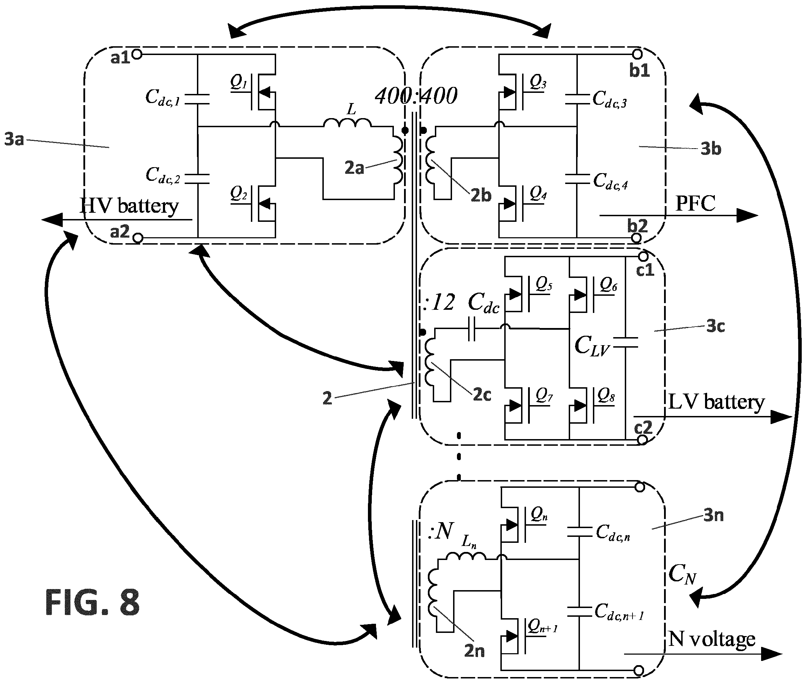

In **Figure 8,** power module (3a) is provided with an inductor (L), and power module (3n), considering as suitable for the use its leakage inductor ($L_n$) of the transformer due to working with high frequencies or the necessity of a low inductance for the transferring of energy, uses the leakage inductor ($L_n$) of the transformer as an inductor, and all possible combinations of two power modules for transferring power through at least one inductor, are indicated by arrows in **Figure 8.**

With the architecture described above, the control unit (4) dynamically operates the power modules as to transfer power between at least two of power modules, as indicated by the arrows of **Figure 8,** as required in any particular moment during the operation of a vehicle.

In other preferred embodiments, one or more of the windings (2a,2b,2c) of **Figure 7 or 8** can be provided with a plurality of winding taps as described above for **Figures 3** and **4.**

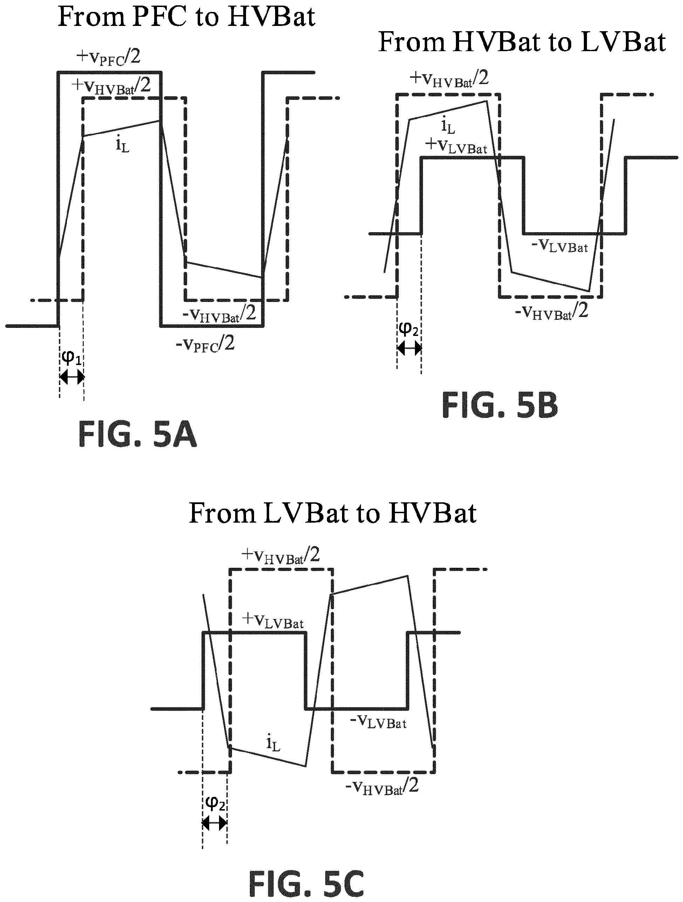

As represented in **Figures 5A, 5B,** and **5C,** the control unit (4) is additionally adapted for controlling the direction of power transfer between two power modules for transferring power, by setting a voltage phase shift between both power modules. The more phase shift, the more the power is transferred, until the maximum available voltage phase shift is achieved which is half of the duty cycle.

By setting the voltage phase shift ($\phi$), the direction of power transfer is dynamically selected so it can be reversed if required.

**Figure 5A** shows power transfer from the second power module (3b) connected to a Power Factor Correction (PFC) device, to the first power module (3a) connected to a High-voltage battery, such voltage signal $V_{HVBat}$ at terminals (a1,a2) is delayed a phase shift ($\phi1$) with respect to voltage signal $V_{PFC}$ at terminals (b1,b2). Current through the inductor ($i_L$) is also represented in the figure.

Similarly, **Figure 5B** shows power transfer from the first power module (3a) connected to a High-voltage battery, to the third power module (3c) connected to a Low-voltage battery, such voltage signal $V_{LVBat}$ at terminals (c1,c2) is delayed a phase shift ($\phi2$) with respect to voltage signal $V_{HVBat}$ at terminals (a1,a2). Current through the inductor ($i_L$) is also represented in the figure.

Finally, **Figure 5C** shows power transfer from the third power module (3c) connected to a Low-voltage battery, to the first power module (3a) connected to a High-voltage battery, to such voltage signal $V_{HVBat}$ at terminals (a1,a2), is delayed a phase shift ($\phi3$) with respect to voltage $V_{LVBat}$ at terminals (c1,c2).

Other preferred embodiments of the present invention are described in the appended dependent claims and the multiple combinations of those claims.

**Claims**

1. A power conversion system (1) adapted for its integration in electric and/or hybrid vehicles, comprising:

   a transformer (2) having at least two windings (2a,2b),
   at least two power modules (3a,3b), each power module connected to one to the windings (2a,2b) of the transformer (2),
   a control unit (4) adapted for controlling the operation of each one of the power modules (3a,3b), **characterized in that**
   the transformer (2) is a variable turns ratio transformer, and wherein the control unit (4) is further adapted to dynamically set a transformer turns ratio $N_m$ based on input voltage $V_{in}$ and output voltages $V_o$ measured respectively at the two power modules (3a,3b) to bring the expression $V_o / (V_{in} * N_m)$ closest to 1, and
   wherein at least one of the transformer windings (2a,2b,2c) has two or more winding taps ($N_1$, $N_{m+1}$, $N_i$), and wherein the system further comprises a winding taps selector (5) operable by the control unit (4) to selectively connect one of the winding taps ($N_1$, $N_{m+1}$, $N_i$) with the corresponding power module (3a,3b,3c), thereby to set the transformer turns ratio $N_m$ that brings the expression $V_o / (V_{in} * N_m)$ closest to 1 and wherein the control unit (4) is further adapted to calculate dynamically the expression Vo / (Vin * Nm) for all the available winding tabs ($N_1$, $N_{m+1}$, $N_i$), and select the one that makes the expression Vo / (Vin * Nm) closest to 1,
   the system (1) further comprises voltage measuring means for measuring voltage $V_{in}$ at the terminals (a1,a2) of the first power module (3a), and voltage $V_o$ at the terminals (b1,b2) of the second power module (3b).

2. Power conversion system according to claim 1, wherein the winding taps selector (5) comprises at least one multi-pole switching device, preferably a multi-pole relay.

3. Power conversion system according to any of the preceding claims, wherein the power modules (3a,3b,3c) are selected from the following list: (i) half bridge or (ii) full bridge.

4. Power conversion system according to any of the preceding claims, wherein the control unit (4) is adapted to dynamically select at least two of the at least two power modules for transferring power between them, and for controlling the direction of power transfer between the at least two power modules (3a,3b), for transferring power, by setting a voltage phase shift ($\phi$) between the at least two power modules (3a,3b), and wherein the power modules (3a,3b,3c) comprise switching devices and the control unit (4) is adapted for controlling the operation of each one of the power modules (3a,3b,3c) by switching on and off the switching devices of the power modules, and
   wherein the control unit (4) is further adapted for controlling or varying the duty cycle and/ or the phase shift, and/or the frequency of any pair of power modules between which power is transferred in a way that the control unit (4) operates the pair of power modules at the same switching frequency.

5. Power conversion system according to claim 1, wherein at least one of the at least two power modules (3a,3b) comprises an inductor (L).

6. Power conversion system according to any of the preceding claims, wherein a first power module (3a) is adapted for its connection with a traction battery of an electric and/or hybrid vehicle, and a second power module (3b) is adapted for its connection with a low-voltage battery of an electric and/or hybrid vehicle, and wherein a third power module (3c) is adapted for its connection with an external charging system for charging an electric and/or hybrid vehicle.

7. Power conversion system according to claim 4, wherein the transformer (2) has only three windings (2a,2b,2c), and wherein the inductor (L) is connected in series between one terminal of a winding and the power module connected with that winding.

8. Power conversion system according to claim 4, wherein the control unit (4) is additionally adapted for controlling the operation of the power modules (3a,3b,3c) so as to transfer power between a first and second power modules through a third power module, and to transfer power from the first power module to the third power module and from the third power module to the second power module.

9. Power conversion system according to any of the preceding claims, wherein at least one of the power modules (3a) is a half bridge having two input/output terminals (a1,a2), and a first branch including two switching devices (Q1Q2) connected in series between the two terminals, and at least one capacitor (Cdc1 - Cdc2) connected as to block "dc" current circulation, and wherein the half bridge is connected to the two terminals of a winding of the transformer (2) respectively at the central connection line between the two switching devices (Q1,Q2) and the two capacitors (Cdc1 - Cdc2).

10. Power conversion system according to any of the preceding claims, wherein at least one of the power modules (3a,3b,3c) is a half bridge having a first branch including two switching devices (Q1-Q4) and one capacitor connected as to block "dc" , and wherein a transformer winding (2a,2b,2c) is also connected to the second end of the capacitor and one end of the first branch.

11. Power conversion system according to any of the preceding claims, wherein at least one of the power modules (3a, 3b, 3c) is a full bridge power module having two input/output terminals, and a first and second branches including each branch, two semiconductor switching devices connected in series between the two terminals, and at least one capacitor connected as to block "dc" current circulation, and wherein the full bridge power module is connected to the two terminals of a winding (2a,2b,2c) of the transformer respectively at the central connection line between the two semiconductor switching devices of each branch.

12. Power conversion system according to claim 1 or 13, wherein at least one power module (3a,3b,3c) is a full bridge power module having two input/output terminals, and a first and second branches including each branch, two semiconductor switching devices (Q1 - Q4) connected in series between the two terminals, and a capacitor connected as to block "dc" current circulation, and wherein the control unit (4) is further adapted to permanently switch off one switching device (Q1 - Q4) of one branch and permanently switch on the other switching device of the same branch during a time period, in a way that the full bridge power module can operate as half bridge power module.

## Patentansprüche

1. Leistungsumwandlungssystem (1), welches zur dessen Integration in Elektro- und/oder Hybridfahrzeuge angepasst ist, umfassend:

   einen Transformator (2), welcher mindestens zwei Wicklungen (2a, 2b) aufweist, mindestens zwei Leistungsmodule (3a, 3b), wobei jedes Leistungsmodul an eine der Wicklungen (2a, 2b) des Transformators (2) angeschlossen ist, eine Steuereinheit (4), welche dazu angepasst ist, den Betrieb jedes der Leistungsmodule (3a, 3b) zu steuern, **dadurch gekennzeichnet, dass**
   der Transformator (2) ein Transformator mit variablem Windungsverhältnis ist, und wobei die Steuereinheit (4) zusätzlich dazu angepasst ist, ein Windungsverhältnis $N_m$ des Transformators basierend auf einer Eingangsspannung $V_{in}$ und Ausgangsspannungen $V_o$, welche jeweils an den beiden Leistungsmodulen (3a, 3b) gemessen werden, dynamisch zu setzen, um den Ausdruck $V_o / (V_{in} * N_m)$ am nächsten an 1 zu bringen, und
   wobei mindestens eine der Transformatorwicklungen (2a, 2b, 2c) zwei oder mehr Wicklungsanzapfungen ($N_1$, $N_{m+1}$, $N_i$) aufweist, und wobei das System zusätzlich einen Wicklungsanzapfungsselektor (5) umfasst, welcher von der Steuereinheit (4) betrieben werden kann, um eine der Wicklungsanzapfungen ($N_1$, $N_{m+1}$, $N_i$) an das entsprechende Leistungsmodul (3a, 3b, 3c) selektiv anzuschließen, um dadurch das Windungsverhältnis $N_m$ des Transformators zu setzen, welches den Ausdruck $V_o / (V_{in} * N_m)$ am nächsten an 1 bringt, und
   wobei die Steuereinheit (4) zusätzlich dazu an-

gepasst ist, den Ausdruck $V_o / (V_{in} * N_m)$ für alle verfügbaren Wicklungsanzapfungen ($N_1$, $N_{m+1}$, $N_i$) dynamisch zu berechnen, und diejenige auszuwählen, welche den Ausdruck $V_o / (V_{in} * N_m)$ am nächsten an 1 bringt,
wobei das System (1) zusätzlich Spannungsmessmittel zur Messung der Spannung $V_{in}$ an den Klemmen (a1, a2) des ersten Leistungsmoduls (3a) und der Spannung $V_o$ an den Klemmen (b1, b2) des zweiten Leistungsmoduls (3b) umfasst.

2. Leistungsumwandlungssystem nach Anspruch 1, wobei der Wicklungsanzapfungsselektor (5) mindestens eine mehrpolige Schaltvorrichtung, vorzugsweise ein mehrpoliges Relais, umfasst.

3. Leistungsumwandlungssystem nach einem der vorhergehenden Ansprüche, wobei die Leistungsmodule (3a, 3b, 3c) aus der folgenden Liste ausgewählt werden: (i) Halbbrücke oder (ii) Vollbrücke.

4. Leistungsumwandlungssystem nach einem der vorhergehenden Ansprüche, wobei die Steuereinheit (4) dazu angepasst ist, mindestens zwei der mindestens zwei Leistungsmodule zur Leistungsübertragung zwischen denselben dynamisch auszuwählen, und die Richtung der Leistungsübertragung zwischen den mindestens zwei Leistungsmodulen (3a, 3b), für die Übertragung von Leistung, zu steuern, indem eine Spannungsphasenverschiebung ($\phi$) zwischen den mindestens zwei Leistungsmodulen (3a, 3b) gesetzt wird, und wobei die Leistungsmodule (3a, 3b, 3c) Schaltvorrichtungen umfassen und die Steuereinheit (4) dazu angepasst ist, den Betrieb jedes der Leistungsmodule (3a, 3b, 3c) mittels des Ein- und Ausschaltens der Schaltvorrichtungen der Leistungsmodule zu steuern, und
wobei die Steuereinheit (4) zusätzlich dazu angepasst ist, den Betriebszyklus und/oder die Phasenverschiebung, und/oder die Frequenz jedes Paares von Leistungsmodulen, zwischen welchen Leistung übertragen wird, zu steuern oder variieren, sodass die Steuereinheit (4) das Paar von Leistungsmodulen mit der gleichen Schaltfrequenz betreibt.

5. Leistungsumwandlungssystem nach Anspruch 1, wobei mindestens eins der mindestens zwei Leistungsmodule (3a, 3b) einen Induktor (L) umfasst.

6. Leistungsumwandlungssystem nach einem der vorhergehenden Ansprüche, wobei ein erstes Leistungsmodul (3a) für dessen Anschluss an eine Traktionsbatterie eines Elektro- und/oder Hybridfahrzeugs angepasst ist, und ein zweites Leistungsmodul (3b) für dessen Anschluss an eine Niederspannungsbatterie eines Elektro- und/oder Hybridfahrzeugs angepasst ist, und wobei ein drittes Leistungsmodul (3c) für dessen Anschluss an ein äußeres Ladesystem zum Laden eines Elektro- und/oder Hybridfahrzeugs angepasst ist.

7. Leistungsumwandlungssystem nach Anspruch 4, wobei der Transformator (2) nur drei Wicklungen (2a, 2b, 2c) aufweist, und wobei der Induktor (L) in Reihe zwischen einer Klemme einer Wicklung und dem Leistungsmodul, welches an diese Wicklung angeschlossen ist, angeschlossen ist.

8. Leistungsumwandlungssystem nach Anspruch 4, wobei die Steuereinheit (4) zusätzlich zur Steuerung des Betriebs der Leistungsmodule (3a, 3b, 3c) angepasst ist, um Leistung zwischen einem ersten und einem zweiten Leistungsmodul über ein drittes Leistungsmodul zu übertragen, und um Leistung vom ersten Leistungsmodul zum dritten Leistungsmodul und vom dritten Leistungsmodul zum zweiten Leistungsmodul zu übertragen.

9. Leistungsumwandlungssystem nach einem der vorhergehenden Ansprüche, wobei mindestens eins der Leistungsmodule (3a) eine Halbbrücke ist, welche zwei Eingangs-/Ausgangsklemmen (a1, a2) und eine erste Verzweigung beinhaltend zwei Schaltvorrichtungen (Q1, Q2), welche in Reihe zwischen den beiden Klemmen angeschlossen sind, und mindestens einen Kondensator (Cdc1 - Cdc2), welcher dafür angeschlossen ist, Gleichstromzirkulation zu blockieren, aufweist, und wobei die Halbbrücke an die beiden Klemmen einer Wicklung des Transformators (2) jeweils an der zentralen Anschlussleitung zwischen den beiden Schaltvorrichtungen (Q1, Q2) und den beiden Kondensatoren (Cdc1 - Cdc2) angeschlossen ist.

10. Leistungsumwandlungssystem nach einem der vorhergehenden Ansprüche, wobei mindestens eins der Leistungsmodule (3a, 3b, 3c) eine Halbbrücke ist, welche eine erste Verzweigung beinhaltend zwei Schaltvorrichtungen (Q1-Q4) und einen Kondensator, welcher dafür angeschlossen ist, Gleichstrom zu blockieren, aufweist, und wobei eine Transformatorwicklung (2a, 2b, 2c) auch an das zweite Ende des Kondensators und an ein Ende der ersten Verzweigung angeschlossen ist.

11. Leistungsumwandlungssystem nach einem der vorhergehenden Ansprüche, wobei mindestens eins der Leistungsmodule (3a, 3b, 3c) ein Vollbrückenleistungsmodul ist, welches zwei Eingangs-/Ausgangsklemmen und eine erste und eine zweite Verzweigung aufweist, wobei jede Verzweigung zwei Halbleiter-Schaltvorrichtungen, welche in Reihe zwischen den beiden Klemmen angeschlossen sind, und mindestens einen Kondensator, welcher dafür angeschlossen ist, Gleichstromzirkulation zu blockieren, beinhaltet, und wobei das Vollbrückenleistungsmodul an die beiden Klemmen einer Wicklung (2a, 2b, 2c) des Transformators jeweils an der zentralen Anschlussleitung zwischen den beiden Halbleiter-Schaltvorrichtungen jeder Verzweigung angeschlossen ist.

12. Leistungsumwandlungssystem nach Anspruch 1 oder 13, wobei mindestens ein Leistungsmodul (3a, 3b, 3c) ein Vollbrückenleistungsmodul ist, welches zwei Eingangs-/Ausgangsklemmen und eine erste und eine zweite Verzweigung aufweist, wobei jede Verzweigung zwei Halbleiter-Schaltvorrichtungen (Q1 - Q4), welche in Reihe zwischen den beiden Klemmen angeschlossen ist, und einen Kondensator, welcher dafür angeschlossen ist, Gleichstromzirkulation zu blockieren, beinhaltet, und wobei die Steuereinheit (4) zusätzlich dazu angepasst ist, während einer Zeitdauer eine Schaltvorrichtung (Q1 - Q4) einer Verzweigung permanent auszuschalten und die andere Schaltvorrichtung der gleichen Verzweigung permanent einzuschalten, sodass das Vollbrückenleistungsmodul als Halbbrückenleistungsmodul funktionieren kann.

## Revendications

1. Système de conversion d'énergie (1) adapté pour son intégration dans des véhicules électriques et/ou hybrides, comprenant :

   un transformateur (2) ayant au moins deux bobinages (2a, 2b),
   au moins deux modules d'énergie (3a, 3b), chaque module d'énergie étant connecté à un des bobinages (2a, 2b) du transformateur (2),
   une unité de contrôle (4) adaptée pour contrôler l'opération de chacun des modules d'énergie (3a, 3b), **caractérisé en ce que**
   le transformateur (2) est un transformateur à rapport de tours variable, et dans lequel l'unité de contrôle (4) est adaptée en outre pour établir dynamiquement un rapport de tours de transformateur $N_m$ basé sur la tension d'entrée $V_{in}$ et des tensions de sortie $V_o$ mesurées respectivement aux deux modules d'énergie (3a, 3b) pour rapprocher l'expression $V_o / (V_{in} * N_m)$ de 1, et dans lequel au moins un des bobinages de transformateur (2a, 2b, 2c) a deux ou plus de prises de bobinage ($N_1$, $N_{m+1}$, $N_i$), et dans lequel le système comprend en outre un sélecteur de prises de bobinage (5) utilisable par l'unité de contrôle (4) pour connecter sélectivement une des prises de bobinage ($N_1$, $N_{m+1}$, $N_i$) avec le module d'énergie correspondant (3a, 3b, 3c), pour établir ainsi le rapport de tours du transformateur $N_m$ qui rapproche l'expression $V_o / (V_{in}$

   $* N_m)$ de 1, et
   dans lequel l'unité de contrôle (4) est adaptée en outre pour calculer dynamiquement l'expression $V_0 / (V_{in} * N_m)$ pour toutes les prises de bobinage disponibles ($N_1$, $N_{m+1}$, $N_i$), et sélectionner celle qui rend l'expression $V_0 / (V_{in} * N_m)$ la plus proche de 1,
   le système (1) comprend en outre des moyens de mesure de tension pour mesurer la tension $V_{in}$ aux bornes (a1, a2) du premier module d'énergie (3a), et la tension $V_o$ aux bornes (b1, b2) du deuxième module d'énergie (3b).

2. Système de conversion d'énergie selon la revendication 1, dans lequel le sélecteur de prises de bobinage (5) comprend au moins un dispositif de commutation multipolaire, préférablement un relais multipolaire.

3. Système de conversion d'énergie selon l'une quelconque des revendications précédentes, dans lequel les modules d'énergie (3a, 3b, 3c) sont sélectionnés de la liste suivante : (i) demi-pont ou (ii) pont complet.

4. Système de conversion d'énergie selon l'une quelconque des revendications précédentes, dans lequel l'unité de contrôle (4) est adaptée pour sélectionner dynamiquement au moins deux des au moins deux modules d'énergie pour transférer l'énergie entre eux, et pour contrôler la direction du transfert de l'énergie entre les au moins deux modules d'énergie (3a, 3b), pour transférer l'énergie, en établissant un déphasage de tension ($\phi$) entre les au moins deux modules d'énergie (3a, 3b), et dans lequel les modules d'énergie (3a, 3b, 3c) comprennent des dispositifs de commutation et l'unité de contrôle (4) est adaptée pour contrôler l'opération de chacun des modules d'énergie (3a, 3b, 3c) en allumant et éteignant les dispositifs de commutation des modules d'énergie, et
   dans lequel l'unité de contrôle (4) est adaptée en outre pour contrôler ou faire varier le cycle de service et/ou le déphasage et/ou la fréquence d'une paire quelconque de modules d'énergie entre lesquels l'énergie est transférée de façon à ce que l'unité de contrôle (4) fasse fonctionner la paire de modules d'énergie à la même fréquence de commutation.

5. Système de conversion d'énergie selon la revendication 1, dans lequel au moins un des au moins deux modules d'énergie (3a, 3b) comprend un inducteur (L).

6. Système de conversion d'énergie selon l'une quelconque des revendications précédentes, dans lequel un premier module d'énergie (3a) est adapté pour sa connexion avec une batterie de traction d'un véhicule électrique et/ou hybride, et un deuxième module d'énergie (3b) est adapté pour sa connexion avec une batterie de basse tension d'un véhicule électrique et/ou hybride, et dans lequel un troisième module d'énergie (3c) est adapté pour sa connexion avec un système de charge externe pour charger un véhicule électrique et/ou hybride.

7. Système de conversion d'énergie selon la revendication 4, dans lequel le transformateur (2) a seulement trois bobinages (2a, 2b, 2c), et dans lequel l'inducteur (L) est connecté en série entre une borne d'un bobinage et le module d'énergie connecté avec ce bobinage.

8. Système de conversion d'énergie selon la revendication 4, dans lequel l'unité de contrôle (4) est additionnellement adaptée pour contrôler l'opération des modules d'énergie (3a, 3b, 3c) afin de transférer l'énergie entre un premier et un deuxième module d'énergie à travers un troisième module d'énergie, et transférer l'énergie depuis le premier module d'énergie au troisième module d'énergie et depuis le troisième module d'énergie au deuxième module d'énergie.

9. Système de conversion d'énergie selon l'une quelconque des revendications précédentes, dans lequel au moins un des modules d'énergie (3a) est un demi-pont ayant deux bornes d'entrée/sortie (a1, a2), et une première branche incluant deux dispositifs de commutation (Q1, Q2) connectés en série entre les deux bornes, et au moins un condensateur (Cdc1 - Cdc2) connecté afin de bloquer la circulation de courant « de », et dans lequel le demi-pont est connecté aux deux bornes d'un bobinage du transformateur (2) respectivement à la ligne de connexion centrale entre les deux dispositifs de commutation (Q1, Q2) et les deux condensateurs (Cdc1 - Cdc2).

10. Système de conversion d'énergie selon l'une quelconque des revendications précédentes, dans lequel au moins un des modules d'énergie (3a, 3b, 3c) est un demi-pont ayant une première branche incluant deux dispositifs de commutation (Q1-Q4) et un condensateur connecté afin de bloquer « de », et dans lequel un bobinage de transformateur (2a, 2b, 2c) est aussi connecté à la deuxième extrémité du condensateur et à une extrémité de la première branche.

11. Système de conversion d'énergie selon l'une quelconque des revendications précédentes, dans lequel au moins un des modules d'énergie (3a, 3b, 3c) est un module d'énergie à pont complet ayant deux bornes d'entrée/sortie, et une première et deuxième branches, chaque branche incluant deux dispositifs de commutation à semi-conducteur connectés en série entre les deux bornes, et au moins un condensateur connecté afin de bloquer la circulation de courant « de » et dans lequel le module d'énergie à pont complet est connecté aux deux bornes d'un bobinage (2a, 2b, 2c) du transformateur respectivement à la ligne de connexion centrale entre les deux dispositifs de commutation à semi-conducteurs de chaque branche.

12. Système de conversion d'énergie selon la revendication 1 ou 13, dans lequel au moins un module d'énergie (3a, 3b, 3c) est un module d'énergie à pont complet ayant deux bornes d'entrée/sortie, et une première et deuxième branches, chaque branche incluant deux dispositifs de commutation à semi-conducteur (Q1 - Q4) connectés en série entre les deux bornes, et un condensateur connecté afin de bloquer la circulation de courant « de », et dans lequel l'unité de contrôle (4) est adaptée en outre pour éteindre de manière permanente un dispositif de commutation (Q1 - Q4) d'une branche et allumer de manière permanente l'autre dispositif de commutation de la même branche pendant une période de temps, de manière à ce que le module d'énergie à pont complet puisse fonctionner comme un module d'énergie en demi-pont.

**FIG. 1**
**(PRIOR ART)**

**FIG. 2A**
(PRIOR ART)

# FIG. 2B
(PRIOR ART)

**FIG. 3**

EP 3 819 160 B1

**FIG. 4**

# From PFC to HVBat

$+v_{PFC}/2$

$+v_{HVBat}/2$

$i_L$

$-v_{HVBat}/2$

$-v_{PFC}/2$

$\varphi_1$

## FIG. 5A

# From HVBat to LVBat

$+v_{HVBat}/2$

$i_L$

$+v_{LVBat}$

$-v_{LVBat}$

$-v_{HVBat}/2$

$\varphi_2$

## FIG. 5B

# From LVBat to HVBat

$+v_{HVBat}/2$

$+v_{LVBat}$

$-v_{LVBat}$

$i_L$

$-v_{HVBat}/2$

$\varphi_2$

## FIG. 5C

FIG. 6A

FIG. 6B

**FIG. 7**

EP 3 819 160 B1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019143822 A1
- US 10160332 B2
- US 2010213902 A1